(19) **Europäisches Patentamt**
**European Patent Office**
**Office européen des brevets**

(11) **EP 1 736 026 B1**

(12) **EUROPEAN PATENT SPECIFICATION**

(45) Date of publication and mention of the grant of the patent:
**19.03.2008 Bulletin 2008/12**

(51) Int Cl.:
*H04Q 11/00* *(2006.01)*  *H04L 12/56* *(2006.01)*

(21) Application number: **05715304.1**

(22) Date of filing: **02.02.2005**

(86) International application number:
**PCT/EP2005/001404**

(87) International publication number:
**WO 2005/101893 (27.10.2005 Gazette 2005/43)**

(54) **A METHOD OF DETERMINING DELAY IN AN ADAPTIVE PATH OPTICAL NETWORK**

EIN VERFAHREN ZUR ERMITTLUNG VON VERZÖGERUNGEN IN EINEM OPTISCHEN ADAPTIVWEGNETZ

PROCEDE DE DETERMINATION DE RETARD DANS UN RESEAU OPTIQUE A VOIE BOUT EN BOUT ADAPTATIF

(84) Designated Contracting States:
**DE FR GB**

(30) Priority: **13.04.2004 GB 0408206**

(43) Date of publication of application:
**27.12.2006 Bulletin 2006/52**

(73) Proprietor: **Nokia Siemens Networks GmbH & Co. KG**
**81541 München (DE)**

(72) Inventor: **DE VEGA RODRIGO, Miguel**
**B-1200 Brussels (BE)**

(74) Representative: **Payne, Janice Julia**
**Siemens AG,**
**Postfach 22 16 34**
**80506 München (DE)**

(56) References cited:
**EP-A- 1 511 233**

- YOO M ET AL: "NEW OPTICAL BURST SWITCHING PROTOCOL FOR SUPPORTING QUALITY OF SERVICE" PROCEEDINGS OF THE SPIE, SPIE, BELLINGHAM, VA, US, vol. 3531, November 1998 (1998-11), pages 396-405, XP000950072 ISSN: 0277-786X
- CHEN Y ET AL: "PROPORTIONAL QOS OVER OBS NETWORKS" GLOBECOM'01. 2001 IEEE GLOBAL TELECOMMUNICATIONS CONFERENCE. SAN ANTONIO, TX, NOV. 25 - 29, 2001, IEEE GLOBAL TELECOMMUNICATIONS CONFERENCE, NEW YORK, NY : IEEE, US, vol. VOL. 3 OF 6, 25 November 2001 (2001-11-25), pages 1510-1514, XP001054831 ISBN: 0-7803-7206-9
- QIAO C ET AL: "CHOICES, FEATURES AND ISSUES IN OPTICAL BURST SWITCHING" OPTICAL NETWORKS MAGAZINE, SPIE, BELLINGHAM, WA, US, vol. 1, no. 2, April 2000 (2000-04), pages 36-44, XP000969814 ISSN: 1388-6916

**Description**

This invention relates to a method of determining delay in an end-to-end path of an adaptive path optical network (APON).

APON networks are able to send internet protocol (IP) packets on the fly between consecutive bursts. This allows edge nodes to empty their aggregation buffers sending IP packets between bursts. Consequently the formation of a burst takes longer, that is, bursts are sent with a lower frequency. This implies a lower average link utilization which is why APON networks show a better performance by comparison with optical burst switching (OBS) or λ-switching networks. It is desirable that a design which optimises the network for a required performance level can be obtained.

YOO M et al: "New Optical Burst Switching Protocol for Supporting Quality of Service" proceedings of the SPIE, SPIE, Bellingham, VA, US, Vol.3531, November 1998 (1998-11), pp 396-405, XP000950072 ISSN:0277-786X describes a prioritised optical burst switching protocol to reduce blocking probability of real time traffic by using additional offset time.

Also CHEN Y et al: "Proportional QoS over OBS networks" Globecom'01. 2001 IEEE Global Telecommunications Conference: San Antonio, TX, Nov 25-29, 2001, IEEE Global Telecommunications Conference, New York, NY: IEEE, US, vol.3 of 6, 25 November 2001 (2001-11-25), pp 1510-1514, XP001054831 ISBN: 0-7803-7206-9 and QIAO C et al: "Choices, features and issues in optical burst switching" Optical Networks magazine, SPIE, Bellingham, WA, US, vol.1, no.2, April 2000 (2000-04), pp36-44, XP000969814 ISSN:1388-6916 provide insights in optical burst switching.

In accordance with the present invention, a method of determining average IP packet delay in an end-to-end path of an adaptive path optical network using optical burst switching optical networks is characterised in that the method comprises deriving average IP packet delay from the product of average link utilisation of IP packets in the network being sent in bursts and delay in two way reservation optical burst switching networks, wherein the average link utilisation in the network being sent in bursts is the ratio of average throughput sent in bursts in bits per second to capacity at a bottleneck link in the end-to-end path in the network.

The present invention determines the delay in an APON network for each end-to-end path so that the network design can be optimised to meet desired minimum delay requirements. Average delay in an end-to-end path of an APON depends only on the average link utilisation of the IP packets sent in bursts, not in the λ-switching regime.

Preferably, the average throughput sent in bursts comprises the product of the burst arrival rate in the bottleneck link and the average burst size.

Preferably, the average link utilisation in the bottleneck link of the end-to-end path in the network being sent in bursts is the ratio of the sum from 1 to N of the product of the average throughput to the edge node i and the probability that the burst is sent through the network without being blocked minus the sum from 1 to N of the product of the average throughput to the edge node i and the probability that an IP packet or burst which is being sent through the bottleneck link comes from the edge node i; to the capacity minus the sum from 1 to N of the product of the average throughput to the edge node i and the probability that an IP packet or burst which is being sent through the bottleneck link comes from the edge node i.

The average throughput and the average IP packet delay in the end-to-end path depend upon the average link load of the bottleneck link of the end-to-end path alone. The rest of the links in this path do not influence the APON's performance.

An example of a method of determining delay in an end-to-end path of an adaptive path optical network in accordance with the present invention will now be described with reference to the accompanying drawings in which:-.

Figure 1 is an analytical model of an end-to-end path in an adaptive path optical network to which the method of the present invention can be applied;
Figure 2 shows bandwidth utilisation of the bottleneck link of the end-to-end path of Fig.1;
Figure 3 compares utilisation factor in the bottleneck link of an end-to-end path in an adaptive path optical network compared with an OBS network; and,
Figure 4 illustrates average IP packet delay in an end-to-end path as a function of the link load in its bottleneck link for OBS, two-way reservation (2WR)-OBS and APRON networks.

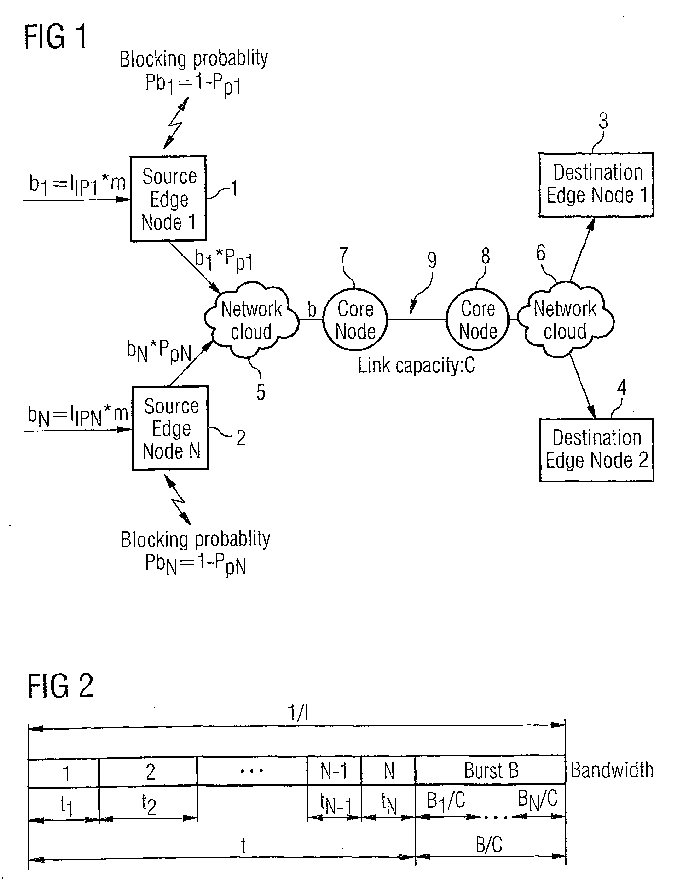

Fig. 1 is an analytical model of an end-to-end path in an APON network in which source edge nodes 1, 2, of which there can be from 1 to N, are connected to corresponding destination nodes 3, 4 through networks 5, 6 via core nodes 7, 8 and a bottleneck link 9 of capacity C. The bottleneck link of an end to end path is defined as the link in this path with the highest average link utilization. This link has a great impact on the network performance since it will lead to the highest blocking probability in the path and it will be responsible for most of the delay experienced by the IP packets (or bursts) sent through the path. For this reason this link has been chosen as a reference for performance comparison in the corresponding end-to-end path and the average link utilization in the bottleneck link 9 is calculated. Blocking in an end-to-end path of a two way reservation network such as APON takes place at the source edge nodes 1, 2, whenever they receive a no acknowledgment (NACK) signal from the destination edge node 3, 4 as an answer to their path setup request.

This blocking can be modelled simply with a certain blocking probability **Pb$_i$** in the source edge nodes 1, 2. In order to simplify notation, the probability that a burst is sent through the path without being blocked **Pp$_i$** is given as **Pp$_i$=1-Pb$_i$**. The incoming average IP packet throughput to edge node **i** is **b$_i$** in bits per second. If $\lambda_{IPi}$ is the average IP packet arrival rate, and $\mu$ is the average IP packet size (the same for all connections), the equation for edge node **i** follows:

$$b_i = \lambda_{IPi} * \mu = \lambda_i * B_i + \lambda_{ioffered} * (1 - Pp_i) * B_i \qquad \text{Equation 1}$$

Where $\lambda_i$ is the average burst arrival rate in the optical link, **B$_i$** is the average burst size for this traffic source, $\lambda_{ioffered}$ is the average burst arrival rate offered to the optical link and **(1-Pp$_i$)** is the proportion of bursts blocked in the edge node. The interpretation of this equation is that what comes into an edge node must go out, since no information is created or destroyed inside the node. The left hand side of equation 1 describes the average IP packed throughput coming to the edge node. This throughput must be equal to what leaves the node on the other side, which is described by the right hand side of the equation. The right hand side is the sum of two terms, the first of these representing the average throughput of the IP packets which have already been transformed into bursts and are offered to the optical network and the second term represents the average throughput of IP packets which have been blocked and thrown away.

Only the bursts which were not blocked have access to the optical link, so $\lambda_i = \lambda_{ioffered} * Pp_i$.

In APON networks the whole bandwidth of the bottleneck link in an end-to-end path is used, since IP packets are sent on the fly between consecutive bursts. Figure 2 illustrates this. The expression $1/\lambda$ represents the average burst inter-arrival time, that is the time elapsed between the arrival of two consecutive bursts. This time is filled with the transmission time of a burst, **B,** which lasts **B/C** seconds in a link of capacity C, and with a transmission time, **t** of IP packets on the $\lambda$-switching regime in which IP packets are sent on-the-fly.

The time *t* can be broken down into **t$_i$, i $\in$ (1, ...,N),** which represents the proportion of the time in the $\lambda$-switching regime, in which IP packets from source *i* are sent on-the-fly. In order to accomplish this, it is necessary to introduce **p$_i$, i $\in$ (1, ...,N),** which represents the probability that an IP packet or a burst which is being sent through the bottleneck link comes from the traffic source *i*. This can be calculated based on the average arrival rates of the bursts from each traffic source, $\lambda_i$ as **p$_i$** = $\lambda_i$ / $\lambda$ where $\lambda$ is the average burst arrival rate at the link.

The more IP packets a traffic source sends, the more probable it is that a certain IP packet transmitted in the $\lambda$-switching regime in the bottleneck link belongs to this source. Therefore, the probability **p$_i$** that an IP packet in the bottleneck link was sent by the edge node i will determine the average length **t$_i$** of the $\lambda$-switching regime of this source. In particular, **t$_i$** = **p$_i$*t**, where **t** is the total average length of the $\lambda$-switching regime as shown in Fig. 2.

In the $\lambda$-switching regime, an edge node forwards the incoming average IP packet throughput **b$_i$** to the network. Therefore, the amount of bits transferred from each traffic source **i** in its $\lambda$-switching regime of length **t$_i$** seconds is **t$_i$*b$_i$** = **p$_i$*t* b$_i$**, where **b$_i$** is the average IP packet throughput arriving at the traffic source **i.**

Analogously to what was done with **t, B** can also be broken down into **B$_i$** with the help of the probabilities **p$_i$** as follows:

$$B = \sum_{i=1}^{N} p_i \cdot B_i \qquad \text{Equation 2}$$

That is, the average burst size is the average burst size of the first source edge node with a probability **p$_1$,** of the second source edge node with a probability **p$_2$** and so on.

According to this and to Figure 2, the average throughput **b** in the bottleneck can be formulated as:

$$b = \lambda \cdot \left[ B + t \cdot \sum_{i=1}^{N} p_i \cdot b_i \right] \qquad \text{Equation 3}$$

Where the first term of the addition represents the amount of bits sent in bursts for all traffic sources and the second term represents the sum of the amount in bits sent in the $\lambda$-switching regime for each one of the N traffic sources.

According to Fig. 2 the length t of the $\lambda$-switching regime can be expressed as

$$t = \frac{1}{\lambda} - \frac{B}{C} = \frac{C - B \cdot \lambda}{\lambda \cdot C}$$

Equation 4

So that the average throughput b can be reformulated as:

$$b = \lambda \cdot \left[ B + \frac{C - B \cdot \lambda}{C \cdot \lambda} \cdot \sum_{i=1}^{N} p_i \cdot b_i \right]$$

Equation 5

Solving for $\lambda_i$ the average burst arrival rate in the bottleneck link:

$$\lambda = \frac{\sum_{i=1}^{N} b_i \cdot Pp_i - \sum_{i=1}^{N} b_i \cdot p_i}{B \left[ 1 - \frac{\sum_{i=1}^{N} b_i \cdot p_i}{C} \right]}$$

Equation 6

This expression depends on input parameters at the IP packet level except for the average burst size in the bottleneck **B**. This size is however exactly the same as in the OBS case, since switching on or off APON functionalities in an OBS network does not change the way in which bursts are made up from the aggregation of IP packets. That is, the burst aggregation strategies remain the same, and therefore the burst sizes as well. So, the average burst size **B** can be calculated as a function of the average burst size generated per traffic source **B$_i$** according to equation 2. The average burst size **B$_i$** generated by each traffic source can be calculated from the IP traffic parameters according to the corresponding aggregation strategy used in each edge node.

In order to obtain a delay expression for APON networks, it is necessary to divide the average link utilization $\rho_{APON}$ into two terms. The first of these is the average link utilisation of IP packets which are being sent in the $\lambda$-switching regime, and the second one is the average link utilisation of IP packets which are being sent in bursts. The first one is referred to as $\rho_{APON\_\lambda\text{-switching}}$ and the second one is referred to as $\rho_{APON\_OBS}$. The definitions of each link utilisation factor are as follows:

$$\rho_{APON\_\lambda-switching} = \frac{bps\ sent\ in\ the\ \lambda-switching\ regime}{C} = \frac{\frac{C - \lambda \cdot B}{C} \sum_{i=1}^{N} p_i \cdot b_i}{C}$$

Equation 7

This expression comes from the right hand side of equation 3.

$$\rho_{APON\_OBS} = \frac{bps\ sent\ as\ bursts}{C} = \frac{\lambda \cdot B}{C}$$

Equation 8

This expression comes from the left hand side of equation 3.

Equation 8 is needed in order to calculate the average IP packet delay in APON networks, so it will be expressed as a function of the input IP traffic parameters:

$$\rho_{APON\_OBS} = \frac{\sum_{i=1}^{N} b_i \cdot Pp_i - \sum_{i=1}^{N} b_i \cdot p_i}{\left[ C - \sum_{i=1}^{N} b_i \cdot p_i \right]}$$

Equation 9

For the calculation of the average IP packet delay in APON networks, the delay experienced by an IP packet in OBS networks can be expressed as the addition of two terms. These are the time that the packet expends in the Edge node ($t_{edge}$) while the burst is being formed and the delay experienced while the switches along the path are being configured ($t_{setup}$).

According to this, the average IP packet delay in 2WR-OBS networks is:

$$E[Delay_{2WR-OBS}] = \frac{t_{edge}}{2} + t_{setup} = \frac{t_{edge}}{2} + t_{RTT}$$

Equation 10

where $t_{RTT}$ is the average round trip time for a header packet due to the two-way reservation.

Once the circuits have been established in a static λ-switching network the packets experience no delay and no delay jitter, only the usual propagation delay, when being transmitted through the network. Therefore the packet delay (and delay jitter) during the operation of a λ-switching network is zero.

$$E[Delay_{\lambda-switching}] = 0$$

Equation 11

APON networks have a lower delay than 2WR-OBS networks, due to the fact that packets transmitted in the λ-switching regime experience no delay (and no delay jitter). The network load determines the proportion of IP packets being transferred in the λ-switching regime, which determines whether the total average delay will tend to the delay in λ-switching networks (zero delay) or to the delay in 2WR-OBS networks. If $\rho_{APON-\lambda-switching}$ is the average link load of IP packets sent in the λ-switching regime and $\rho_{APON-OBS}$ is the average link load of IP packets sent in bursts in the bottleneck link of a given end-to-end path, the average delay in this path of the APON network can be calculated as follows:

$$E[Delay_{AOPN}] = \rho_{APON-\lambda-switching} \cdot E[Delay_{\lambda-switching}] + \rho_{APON-OBS} \cdot E[Delay_{2WR-OBS}]$$

Equation 12

Since the delay in λ-switching networks is zero, the equation can be simplified as follows:

$$E[Delay_{AOPN}] = \rho_{APON-OBS} \cdot E[Delay_{2WR-OBS}]$$

Equation 13

As the link utilization ρ is always below 1, the equation above demonstrates that the delay in APON networks is below that in 2WR-OBS networks. For link utilization loads close to zero, the delay tends to zero, which expresses the fact that in this case most of the IP packets are sent through the path in the λ-switching regime and not in bursts. For high utilization loads (close to one), the delay tends to the delay in 2WR-OBS networks, expressing the fact that in this case most of the IP packets are sent in bursts. The derived mathematical formula of Equation 9 enables the link utilization factor in APON networks to be calculated, as well as using this formula as the basis for the APON delay formula of equation 13.

Advantages of the method of the present invention include the fact that it is an exact method, since no approximations of any kind are made; it is valid for any kind of traffic statistics, such as Poisson traffic or self similar traffic, which allows the model to be used in access as well as in core networks; and it is valid for any APON network topology. The method is easy to implement and to calculate, which makes it suitable for its implementation in APON edge nodes, APON core nodes or in planning tools; and it allows comparison of the performance of APON, OBS and λ-switching networks in terms of delay.

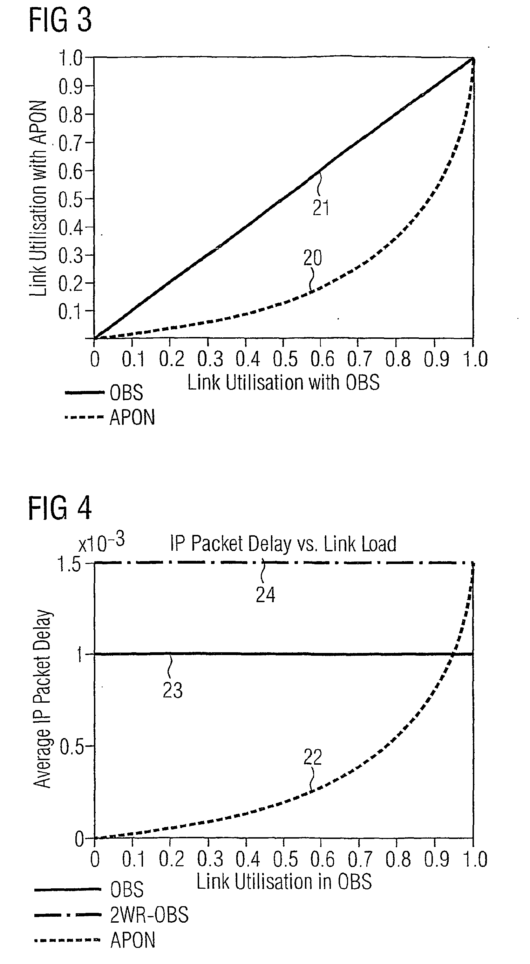

The graphs of Figs. 3 and 4 illustrate an example of link utilization and of delay as a function of the network load that can be obtained with the method of the present invention. It can be seen from Fig. 3 that the average link utilization in APON networks 20 is always below the average link utilization in OBS networks 21 except for the unrealistic link utilization values of 0 and 1. This is the reason why the performance of APON networks in terms of blocking probability and delay is always higher. For medium to high loaded networks, i.e. for link utilization between 0.4 and 0.8, the reduction of the link utilization in APON networks compared to OBS networks is at its maximum. This makes it a very attractive working area for any optical network.

In Fig. 4, the delay in APON networks 22 is shown to be far below the delay in OBS networks 23 at $1x\ 10^{-3}$ and in 2WR-OBS networks 24 at $1.5 \times 10^{-3}$. This applies for link utilizations below 0.9. This is again the ideal working area of any optical network. The performance increase in terms of delay of APON networks is higher with lower link utilizations.

The present invention provides a method of determining average delay in an adaptive path optical network. This includes calculating link utilization in APON networks in a way which is exact and valid for any burst size distribution, and any inter-arrival time distribution between bursts, i.e. not only for Poisson traffic. The derived delay formula for APON networks is based on the new link utilization calculation. The delay formula can be used to calculate the average IP packet delay in any APON network. This formula has several applications including use as a planning tool - to design APON networks that fulfil a certain maximum allowed delay; use in APON edge nodes as the core of an admission control mechanism that accepts or rejects bursts depending on whether the additional load makes the average network delay exceed a certain limit or not; use in helping a routing algorithm to balance a load, so that all end to end paths have approximately the same average delay; and use in helping a quality of service (QoS) routing algorithm to route high-priority bursts through lower delay paths.

## Claims

1. A method of determining average IP packet delay in an end-to-end path of an adaptive path optical network using optical burst switching optical networks, **characterised in that** the method comprises deriving average IP packet delay from the product of average link utilisation of IP packets in the network being sent in bursts and delay in two way reservation optical burst switching networks, wherein the average link utilisation in the network being sent in bursts is the ratio of average throughput sent in bursts in bits per second, to capacity at a bottleneck link in the end-to-end path in the network.

2. A method according to claim 1, wherein the average throughput sent in bursts comprises the product of the burst arrival rate in the bottleneck link and the average burst size.

3. A method according to claim 1, wherein the average link utilisation in the bottleneck link of the end-to-end path in the network being sent in bursts is the ratio of the sum from 1 to N of the product of the average throughput to the edge node i and the probability that the burst is sent through the network without being blocked minus the sum from 1 to N of the product of the average throughput to the edge node i and the probability that an IP packet or burst which is being sent through the bottleneck link comes from the edge node i; to the capacity minus the sum from 1 to N of the product of the average throughput to the edge node i and the probability that an IP packet or burst which is being sent through the bottleneck link comes from the edge node i.

## Patentansprüche

1. Verfahren zum Bestimmen der mittleren IP-Paketverzögerung in einem Ende-zu-Ende-Weg eines optischen Adaptivwegnetzes, das optische Netze mit optischer Burstvermittlung verwendet, **dadurch gekennzeichnet, daß** das Verfahren den folgenden Schritt umfaßt: Ableiten einer mittleren IP-Paketverzögerung aus dem Produkt der mittleren Streckenauslastung von IP-Paketen in dem Netz, die in Bursts gesendet werden, und der Verzögerung in bidirektionalen optischen Burstvermittlungsnetzen mit Reservierung, wobei die mittlere Streckenauslastung in dem Netz, die in Bursts gesendet wird, das Verhältnis des in Bursts gesendeten mittleren Durchsatzes in Bit pro Sekunde der Kapazität einer Engpaßstrecke in dem Ende-zu-Ende-Weg in dem Netz ist.

2. Verfahren nach Anspruch 1, wobei der in Burst gesendete mittlere Durchsatz das Produkt der Burstankunftsrate in der Engpaßstrecke und der mittleren Burstgröße umfaßt.

3. Verfahren nach Anspruch 1, wobei die mittlere Streckenauslastung in der Engpaßstrecke des Ende-zu-Ende-Weges in dem Netz, die in Bursts gesendet wird, das Verhältnis der Summe von 1 bis N des Produkts des mittleren Durchsatzes zu dem Randknoten i und der Wahrscheinlichkeit, daß der Burst durch das Netz gesendet wird, ohne blockiert zu werden, minus der Summe von 1 bis N des Produkts des mittleren Durchsatzes zu dem Randknoten i und der Wahrscheinlichkeit, daß ein IP-Paket oder Burst, der durch die Engpaßstrecke gesendet wird, aus dem Randknoten i kommt; zu der Kapazität minus der Summe von 1 bis N des Produkts des mittleren Durchsatzes zu dem Randknoten i und der Wahrscheinlichkeit, daß ein IP-Paket oder Burst, der durch die Engpaßstrecke gesendet wird, aus dem Randknoten i kommt, ist.

## Revendications

1. Procédé de détermination du retard moyen de paquets IP dans une voie de bout en bout d'un réseau optique à voie adaptive utilisant des réseaux optiques à commutation par rafales optiques, **caractérisé en ce que** le procédé comprend d'obtenir le retard moyen de paquets IP à partir du produit de l'utilisation moyenne de la liaison de paquets IP dans le réseau étant envoyés par rafales et du retard dans des réseaux optiques à commutation de rafales à réservation de priorité bidirectionnelle, dans lequel l'utilisation moyenne de la liaison dans le réseau étant envoyée par rafales est le rapport du débit moyen envoyé par rafales en bits par seconde, sur la capacité au niveau d'une liaison à goulot d'étranglement dans la voie de bout en bout dans le réseau.

2. Procédé selon la revendication 1, dans lequel le débit moyen envoyé par rafales comprend le produit de la vitesse d'arrivée des rafales dans la liaison à goulot d'étranglement et de la taille moyenne des rafales.

3. Procédé selon la revendication 1, dans lequel l'utilisation moyenne de la liaison dans la liaison à goulot d'étranglement de la voie de bout en bout dans le réseau étant envoyée par rafales est le rapport de la somme de 1 à N du produit du débit moyen vers le noeud d'extrémité i et la probabilité que la rafale soit envoyée sur le réseau sans être bloquée moins la somme de 1 à N du produit du débit moyen vers le noeud d'extrémité i et la probabilité qu'un paquet IP ou une rafale qui est envoyée par la liaison à goulot d'étranglement provienne du noeud d'extrémité i ; sur la capacité moins la somme de 1 à N du produit du débit moyen vers le noeud d'extrémité i et la probabilité qu'un paquet IP ou une rafale qui est envoyée par la liaison à goulot d'étranglement provienne du noeud d'extrémité i.

## FIG 1

Blocking probablity
$Pb_1 = 1 - P_{p1}$

$b_1 = I_{IP1} * m$ → Source Edge Node 1 — 1

$b_1 * P_{p1}$

Network cloud — 5

$b_N * P_{pN}$

$b_N = I_{IPN} * m$ → Source Edge Node N — 2

Blocking probablity
$Pb_N = 1 - P_{pN}$

b — Core Node 7

9

Core Node 8

Link capacity:C

Network cloud — 6

Destination Edge Node 1 — 3

Destination Edge Node 2 — 4

## FIG 2

$1/I$

Bandwidth

| 1 | 2 | $\cdots$ | N-1 | N | Burst B |
|---|---|---|---|---|---|
| $t_1$ | $t_2$ | | $t_{N-1}$ | $t_N$ | $B_1/C$  $\cdots$  $B_N/C$ |

t

B/C

# FIG 3

Link Utilisation with APON (y-axis)
Link Utilisation with OBS (x-axis)

—— OBS
---- APON

# FIG 4

x10⁻³   IP Packet Delay vs. Link Load

Average IP Packet Delay (y-axis)
Link Utilisation in OBS (x-axis)

—— OBS
—·— 2WR-OBS
······ APON

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- New Optical Burst Switching Protocol for Supporting Quality of Service. **YOO M et al.** proceedings of the SPIE. November 1998, vol. 3531, 396-405
- Proportional QoS over OBS networks. **CHEN Y et al.** Globecom'01. 2001
- *IEEE Global Telecommunications Conference,* 25 November 2001
- IEEE Global Telecommunications Conference. IEEE, 25 November 2001, vol. 3 of 6, 1510-1514
- Choices, features and issues in optical burst switching. **QIAO C et al.** Optical Networks magazine, SPIE. April 2000, vol. 1, 36-44